# EUROPEAN PATENT APPLICATION

(11) **EP 1 347 361 A1**
(43) Date of publication of application: **24.09.2003**
(21) Application number: 02388023.0
(22) Date of filing: 22.03.2002
(51) Int. Cl.: G06F 3/023

(54) **Entering text into an electronic communications device**

(71) Applicant: Sony Ericsson Mobile Communications AB, 221 88 Lund (SE)
(72) Inventor: Unruh, Erland, 217 59 Malmö (SE)
(74) Representative: Boesen, Johnny Peder

(57) **Abstract**

In a method of entering text into an electronic communications device by means of a keypad having a number of keys, each key representing a plurality of characters, entered text is displayed on a display arranged on the device. A sequence of keys is activated, and possible character sequences corresponding to the activated key sequence are generated. These sequences are compared with a vocabulary stored in a memory and comprising character sequences representing words occurring in a given language. Those of the possible character sequences that match character sequences in the vocabulary are pre-selected, and a number of the pre-selected sequences are presented in a separate graphical object (11) arranged predominantly on the display. Thus there is provided a way of entering text by means of keys representing a plurality of characters, which is easier to use for new users, and which does not divert the attention of the user.

## Description

### Technical Field of the Invention

The invention relates to a method of entering text into an electronic communications device by means of a keypad having a number of keys, each key representing a plurality of characters, and wherein entered text is displayed on a display arranged on the electronic communications device, the method comprising the steps of activating a sequence of keys; generating possible character sequences corresponding to said activated key sequence; comparing said possible character sequences with a vocabulary stored in a memory, said vocabulary comprising character sequences representing words occurring in a given language; pre-selecting those of said possible character sequences that match character sequences stored in said vocabulary; and presenting a number of the pre-selected character sequences on said display. The invention further relates to an electronic communications device featuring the option of entering text into the device.

### Description of Related Art

Electronic communications devices, such as mobile telephones and Personal Digital Assistants (PDA's), often utilize a numeric keypad for entering numeric information, such as telephone numbers or time information, into these devices. However, there is typically also a need to enter text information into such devices. Examples are names, addresses and messages to be sent to other similar devices. Since these devices only rarely have sufficiently large dimensions for the arrangement of a normal alphanumeric keyboard, the numeric keypad must be used also for text information. Consequently, each key corresponds to multiple different characters. As an example, the "2" key typically also corresponds to the letters A, B and C.

One well-known method of entering text information from such a keypad is the multi-tap method in which the user is allowed to iterate through the possible characters by pressing the corresponding key multiple times. To enter e.g. the letter "A", the user presses the "2" key a single time, while the key is pressed three times to enter the letter "C". The key must be pressed the multiple times relatively fast to ensure that the correct character is recognized. Alternatively, a separate key is used to iterate through the possibilities, once one of the numeric keys has been pressed.

An improved method uses a predictive editor application for entering and editing text information. One such method is described in US 6 307 548. When text is entered using predictive input, each key is only pressed once, and the display will show one of the possible character sequences corresponding to the entered key sequence, typically the one which is most commonly used in the language of the user, or by using the exact match approach. There is no time limit, so it is possible to press the keys relatively fast after each other. If, for example, a user (using the English language) enters the key sequence "2" (ABC), "7" (PQRS) and "3" (DEF), 36 different character sequences are possible. However, only five of these (ARE, APE, CRE, BRE and ARD) are found as words or word stems in the stored vocabulary of the device. "ARE" has the highest frequency of use and it will thus be shown in the display. If this is the word the user intended to write, it can be accepted by pressing an acceptance key, which could typically be the key used for entering a space character. If it is not the correct word, the user may step through the other proposals by using a select key until the correct word is shown at the insertion point in the text, before it is accepted with the acceptance key. During character entry, i.e. as long as a word has not yet been accepted, the word is held "open", which is typically shown by underlining of the word (or character sequence) or drawing of a box around it. This illustrates that the shown word is just one of the possibilities or candidates provided by the vocabulary.

As mentioned, one candidate is presented on the display in the text message entered by the user. The other candidates may be cycled through by use of a select key, e.g. one of the arrow up/down keys. Each time a different candidate is inserted into the text on the display. To facilitate the navigation, the individual candidates may be identified by their number being shown in e.g. the corner of the display. In the above-mentioned example the word "ARE" may be identified by "1/5" showing that this is candidate number one of five candidates. If the display of the device is large enough, it is also known from e.g. US 6 307 548 to facilitate the navigation by locating a selection list region below the text region, wherein a list of at least some of the candidates is provided. One of the candidates in the selection list is marked in that it e.g. appears within a box drawn with solid or dotted lines, and the same candidate is also shown at the insertion point of the text message. Pressing a select key moves the box to the next candidate in the list which is also then shown at the insertion point. When the correct word is shown in the box in the selection list and at the insertion point, it can be accepted and the system is ready for the next word to be entered.

However, even with these facilitating measures the use of the predictive input system is still confusing to many users. Especially for inexperienced users it is not obvious how to scroll through the various candidates. It might not even be obvious that it is possible to choose between different candidates at all. Similarly, many new users do not know how to accept one of the candidates and continue to the next word. The combination of these problems leads to a situation where many new users desist from using predictive text input and return to the well known multi-tap method instead.

Further, it is a problem for experienced users that since the first available candidate is actually the intended word in about 75 to 80 percent of the cases, it becomes a habit just to accept the first candidate without actually checking whether it was correct or not. Due to the small font, which is usually used on the relatively small displays, it is not always easy to read quickly what has been entered, so it is just assumed that the predictive input system provided the correct word. Consequently, errors often remain in the text.

Another problem is that, the fact that the selected candidate is shown as well in the selection list as at the insertion point in the previously entered text actually diverts the focus of the user, because he will automatically try to focus on both places simultaneously with the result that he is not really focusing on any of them.

Therefore, it is an object of the invention to provide a way of entering text by means of keys representing a plurality of characters, which is easier to use for new users, and which does not divert the attention of the user as described above, thus also leading to a lower error rate in the entered text.

### Summary

According to the invention the object is achieved in that the number of pre-selected character sequences are presented on the display in a separate graphical object arranged predominantly on the display.

By presenting the character sequences in a separate graphical object, e.g. in the form of a separate window on the display, arranged predominantly on the display the focus of the user is concentrated on this object and thus on the character sequences from which the user can select one. Thus the diversion mentioned above is avoided. In a separate graphical object it is also possible to present the character sequences with a larger font size, which makes it easier to check the words even when characters are entered very fast. Thus the number of errors during text entry can be reduced. For new and inexperienced users the separate graphical object will make it more intuitive to use predictive text input, because the word candidates are shown directly and clearly on the display.

Further, the separate graphical object will also reduce the need for computational resources, which is very important in small communications devices. In the known solutions it normally takes a considerable amount of CPU power to keep the text layout up to date on the display, because the processor has to handle the process of searching for candidates in the vocabulary, presenting them in the selection list and updating the text shown at the insertion point of the text message when the user iterates through the possible candidates. With a separate graphical object there is no need to update the text at the insertion point so often. Actually, the text does not need to be updated at all before the graphical object is closed when candidate is accepted. This results in a lower and more stable processor load. This is important because the current predictive text input systems often cause a heavy load on the processor.

When the method further comprises the step of indicating distinctly one of the character sequences presented in said separate graphical object, it is much easier to see which one of the candidates is presently suggested for acceptance.

In an embodiment of the invention, the method further comprises the steps of rank ordering the pre-selected character sequences according to their frequency of use in said language, and indicating distinctly as default the most commonly used character sequence in said separate graphical object. In this way it is ensured that the suggested candidate is the one that the user with the highest probability intended to enter.

When the method further comprises the step of allowing a user to indicate distinctly a different one of said pre-selected character sequences, it is easy for the user to navigate between the candidates and to see which one is suggested at any given time.

When the method further comprises the steps of allowing a user to select the indicated character sequence, and adding the selected character sequence to the text displayed on the display, the display is updated with the selected character sequence when the user has made his choice.

When the method further comprises the step of removing said separate graphical object from the display when a character sequence has been selected, the user is allowed to obtain an overview of the entire message before the process is continued with the entry of further words. While the separate graphical object is very useful during entry of a word, it will often be more helpful with an overview between entry of the individual words.

The method may further comprise the step of removing said separate graphical object from the display when a predefined period of time has elapsed since the last activation of a key. If no keys have been activated for a certain time, e.g. in the middle of a word, the user might have been disturbed, and it will often be more convenient to see the overview when the entry process is resumed. As soon as a key is activated again, the graphical object will reappear.

The method may also comprise the step of arranging said number of pre-selected character sequences vertically in said separate graphical object. The vertical presentation of the pre-selected character sequences is expedient because it corresponds to the list of the candidates stored in the memory.

In an expedient embodiment the step of allowing a user to indicate distinctly a different one of said pre-selected character sequences is performed by allowing the user to navigate between individual pre-selected character sequences by activating an upwards-key for indicating a character sequence presented just above the character sequence presently indicated, and by activating a downwards-key for indicating a character sequence presented just below the character sequence presently indicated.

The method may further comprise the step of allowing the user, in the case where not all pre-selected character sequences are presented in said separate graphical object, to exclude one of the presently presented character sequences and instead present a character sequence not presently presented by activation of one of the upwards- and downwards-keys. In this way the user can scroll through the list of candidates, even when it comprises a larger number of candidates.

When the method further comprises the step of adjusting the width of said separate graphical object according to the length of the character sequence being presented, a dynamic graphical object is achieved which adapts to the size of the character sequences shown.

Further the method may comprise the step of presenting the character sequences in said separate graphical object with a font size which is adjusted in accordance with the length of the character sequence being presented. Thus also the presentation of long words is possible in the graphical object.

In an expedient embodiment the method further comprises the step of comparing said possible character sequences with a vocabulary comprising character sequences representing words as well as word stems occurring in said given language.

The method may further comprise the step of showing a cursor in combination with the distinctly indicated character sequence. The cursor is a further help to ensure that the attention of the user is focused on the graphical object with the candidates.

The method may further comprise the step of keeping text that is displayed outside said separate graphical object unchanged as long as said separate graphical object is shown on the display. In this way considerable amounts of processor resources may be saved.

Processor resources may also be saved when the method further comprises the step of updating text that is displayed outside said separate graphical object at a low rate compared to the key activation rate as long as said separate graphical object is shown on the display.

As mentioned, the invention further relates to an electronic communications device featuring the option of entering text into the device, and comprising a keypad having a number of keys, each key representing a plurality of characters; a display arranged on the electronic communications device, on which entered text may be displayed; a memory, wherein a vocabulary comprising character sequences representing words occurring in a given language is stored; means for generating possible character sequences corresponding to a sequence of activated keys; means for comparing said possible character sequences with said stored vocabulary and pre-selecting possible character sequences matching character sequences stored in the vocabulary; and means for presenting a number of the pre-selected character sequences on said display. When the presenting means is arranged to present the number of pre-selected character sequences on the display in a separate graphical object arranged predominantly on the display, a way of entering text by means of keys representing a plurality of characters is achieved, which is easier to use for new users, and which does not divert the attention of the user as described above, thus also leading to a lower error rate in the entered text.

When the presenting means is further arranged to indicate distinctly one of the character sequences presented in said separate graphical object, it is much easier to see which one of the candidates is presently suggested for acceptance.

In an embodiment of the invention, the device is further arranged to rank order the pre-selected character sequences according to their frequency of use in said language, and indicate distinctly as default the most commonly used character sequence in said separate graphical object. In this way it is ensured that the suggested candidate is the one that the user with the highest probability intended to enter.

When the device is further arranged to allow a user to indicate distinctly a different one of said pre-selected character sequences, it is easy for the user to move around between the candidates and to see which one is suggested at any given time.

When the device is further arranged to allow a user to select the indicated character sequence, and add the selected character sequence to the text displayed on the display, the display is updated with the selected character sequence when the user has made his choice.

When the device is further arranged to remove said separate graphical object from the display when a character sequence has been selected, the user is allowed to get an overview of the entire message before the process is continued with the entry of further words. While the separate graphical object is very useful during entry of a word, it will often be more helpful with an overview between entry of the individual words.

The device may further be arranged to remove said separate graphical object from the display when a predefined period of time has elapsed since the last activation of a key. If no keys have been activated for a certain time, e.g. in the middle of a word, the user might have been disturbed, and it will often be more convenient to see the overview when the entry process is resumed. As soon as a key is activated again, the graphical object will reappear.

The device may further be arranged to present said number of pre-selected character sequences vertically in said separate graphical object. The vertical presentation of the pre-selected character sequences is expedient because it corresponds to the list of the candidates stored in the memory.

In an expedient embodiment the device is further arranged to allow a user to indicate distinctly a different one of said pre-selected character sequences by allowing the user to navigate between individual pre-selected character sequences by activating an upwards-key for indicating a character sequence presented just above the character sequence presently indicated, and by activating a downwards-key for indicating a character sequence presented just below the character sequence presently indicated.

The device may further be arranged to allow the user, in the case where not all pre-selected character sequences are presented in said separate graphical object, to exclude one of the presently presented character sequences and instead present a character sequence not presently presented by activation of one of the upwards- and downwards-keys. In this way the user can scroll through the list of candidates, even when it comprises a large number of candidates.

When the device is further arranged to adjust the width of said separate graphical object according to the length of the character sequence being presented, a dynamic graphical object is achieved which adapts to the size of the character sequences shown.

Further the device may be arranged to present the character sequences in said separate graphical object with a font size which is adjusted according to the length of the character sequence being presented. Thus also the presentation of long words is possible in the graphical object.

In an expedient embodiment the device is further arranged to compare said possible character sequences with a vocabulary comprising character sequences representing words as well as word stems occurring in said given language.

The device may further be arranged to show a cursor in combination with the distinctly indicated character sequence. The cursor is a further help to ensure that the attention of the user is focused on the graphical object with the candidates.

The device may further be arranged to keep text that is displayed outside said separate graphical object unchanged as long as said separate graphical object is shown on the display. In this way considerable amounts of processor resources may be saved.

Processor resources may also be saved when the device is further arranged to update text that is displayed outside said separate graphical object at a low rate compared to the key activation rate as long as said separate graphical object is shown on the display.

In an expedient embodiment the generating means, comparing means and presenting means are implemented in a processor.

### Brief Description of the Drawings

The invention will now be described more fully below with reference to the drawings, in which
figure 1 shows a mobile telephone in which the invention may be used;
figure 2 shows a block diagram of the telephone in figure 1;
figures 3 to 5 show examples of the display of a known predictive editor;
figures 6 to 8 show the use of a separate graphical object on the display during activation of a key sequence;
figure 9 shows the display when the key sequence is interrupted;
figure 10 shows the display when the key sequence is continued;
figure 11 shows the display when a word is accepted;
figures 12 and 13 show the display when different candidates are elected;
figure 14 shows the display when another word is accepted;
figure 15 shows the display when the graphical object is enlarged to accommodate a longer word;
figure 16 shows the display when a smaller font size is used to accommodate a longer word in the graphical object; and
figure 17 shows the display with the graphical object located in the left side.

### Detailed Description of Embodiments

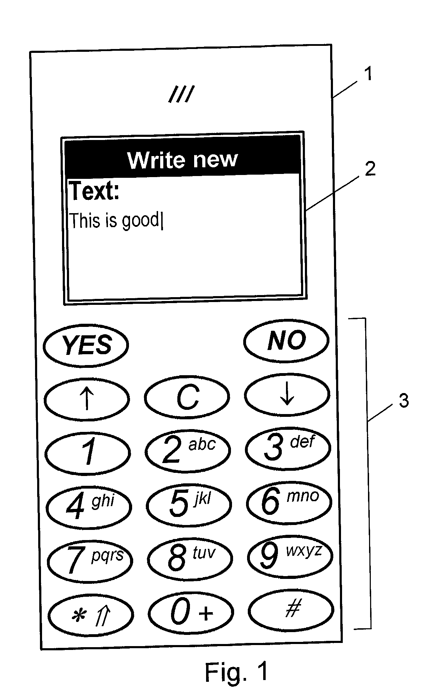

Figure 1 shows an example of a device in which the invention can be used. The shown device is a mobile telephone 1, e.g. a GSM telephone and/or a UMTS telephone. Other types of telephones are CDMA, PDC, CDMA 2000 and TDMA. However, it should be noted that the invention could be used in other types of devices also. As examples, PDA's (Personal Digital Assistant) and computers may be mentioned.

The telephone 1 is equipped with a display 2 and a keypad 3. The keys of the keypad 3 are used for entering information into the telephone. This information may be of many various types, such as telephone numbers, address information, instructions to the telephone and text messages to be sent to another telephone. The display 2 is used for presentation of information to the user of the mobile telephone. Also the presented information may be of various types, such as telephone numbers, address information, indications from the telephone, text messages received from another telephone, or text messages entered by the keypad 3 for later transmission to another telephone. In figure 1 a part of a text message has been entered from the keypad 3, and the entered text is now shown on the display 2. This is a situation in which the invention can be utilized.

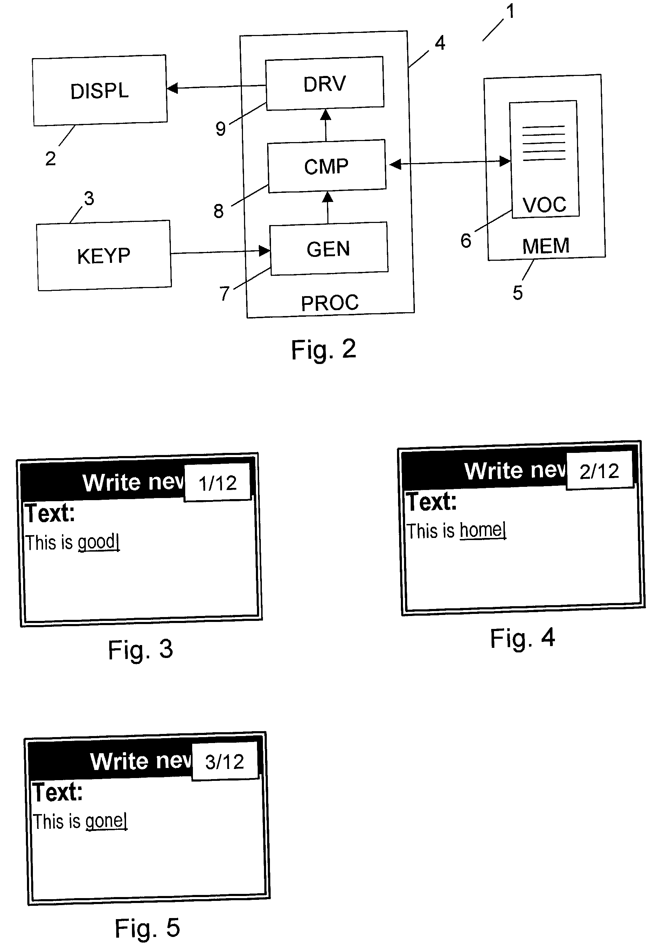

As shown, the keypad 3 is a numeric keypad having only a limited number of keys. Thus each key corresponds to multiple different characters when the keypad is used for entering text information. As an example the "3" key also corresponds to the letters D, E and F. To facilitate text entry many such devices are equipped with a predictive editor, which is an intelligent software protocol capable of suggesting possible character sequences corresponding to a given key sequence entered by the user. One such well-known predictive editor is named T9™ (registered trademark owned by Tegic Communications, Inc.), which is commercially available and well described in the art. Another one is eZyText™ (registered trademark owned by Zy Corporation). Thus the function of the predictive editor will only be described very briefly with reference to figure 2.

As illustrated in figure 2, the telephone 2 also includes a processor 4 and a memory 5. In the memory 5 a vocabulary 6 is stored which comprises a list of allowable character sequences for a given language, i.e. character sequences which form words or word stems in that language. Of course a device may have several different vocabularies corresponding to different languages stored in the memory. When a user enters a key sequence from the keypad 3 the possible corresponding character sequences are generated in the unit 7 in the processor 4. If, for instance, the user (using the English language) enters the key sequence "4" (GHI), "6" (MNO), "6" (MNO) and "3" (DEF), 81 different character sequences are possible. These are now compared (in the comparing unit 8) to the vocabulary 6, and it is found that only 12 of the 81 possible character sequences are stored in the vocabulary 6 as English words or word stems. Thus these 12 character sequences are now selected as candidates for presentation to the user, and the driver 9 presents them on the display 2. Often the vocabulary 6 also contains information of the frequency of use for each character sequence in the relevant language, and in that case the selected sequences may further be ranked according to their use, so that the most commonly used character sequence is presented at the top of the list. In this case "good" is the most commonly used word among the 12 selected character sequences, and it is thus presented to the user as the first suggestion.

The presentation to the user is illustrated in figure 3, in which the user has entered the words "This is" followed by the above sequence. Since "good" is the first of the suggestions, it is shown on the display. It is shown that "good" is underlined to indicate that this word is still open, i.e. it may still be changed to another one of the selected possibilities. Further, it is indicated in the upper right corner of the display that this suggestion is the first of the 12 possibilities by showing "1/12" in a box. If this is the word the user intended to enter, it can be accepted by e.g. entering a space character. The acceptance is shown by moving the cursor to the next position, and "good" will no longer be underlined.

If, however, it is not the intended word, the user can move to the next one on the list by means of e.g. an "arrow down" key. As shown in figure 4, the system then suggests "home" and indicates "2/12" in the upper corner. In figure 5 this step has been repeated, and the system suggests "gone". When the intended word is shown, it can be accepted as described above, and the user can continue with the next word.

It may also be possible to go back to an earlier entered word and "re-open" it to switch to another candidate or to continue typing to achieve a longer word. In some systems there are also options to extend the vocabulary search to get "word completion". In this case a candidate longer than the number of key entries can be shown, and often this word is inserted in the vocabulary by the user.

An improved solution according to the invention will now be described, in which a new graphical input object, e.g. in the form of a separate window, is shown on the display. This object co-exists with the text editor and the original predictive input method described above. It can be pictured as a data list with built-in search function. The data in the data list is the complete vocabulary, i.e. thousands of words and word stems. However, the search function does not only sort words, it also prunes away all not matching words, thus keeping the number at a very reasonable count, typically below 20.

The graphical object is only visible on the display when a word is open, i.e. underlined in the above-mentioned example. It is completely invisible when no word is open. Thus it is shown or open under direct text entry, while it is closed e.g. when the user enters space characters, navigates between words, etc. The graphical object looks like an ordinary list object showing a number of candidates at the same time, and it will be described in more detail in the following.

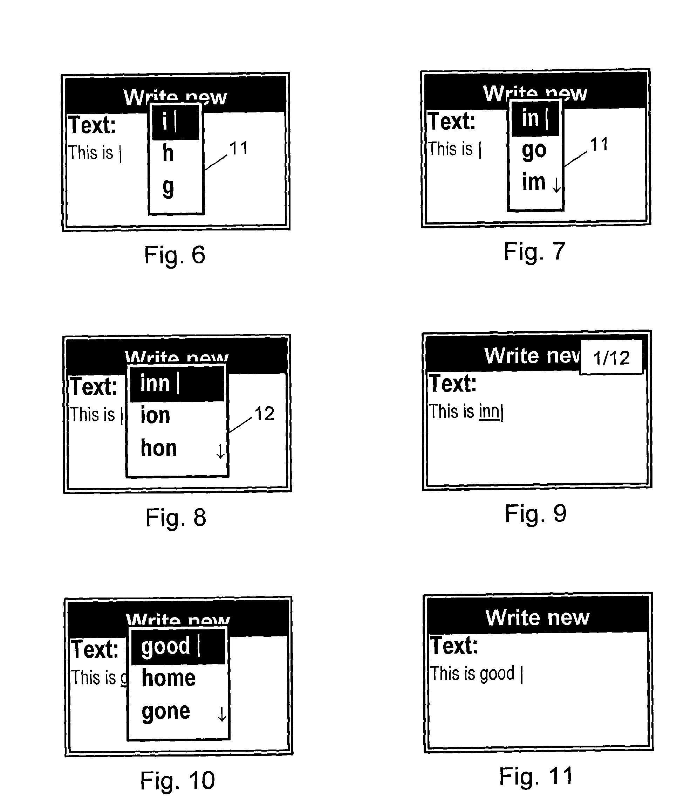

Figure 6 shows an example of how the object can be shown on the display 3 of the mobile telephone 1 from figure 1. Again the user has entered the words "This is", and he continues with the key sequence described above. When the key "4 ghi" is activated the system opens a new word. Instead of showing the most commonly used character, which in this case is "i", underlined at the insertion point, a new object or window 11 is now shown so that it covers a part of the existing display and attracts the attention of the user. It may also have a colour different from the background to improve this effect. The object shows the three possible characters related to the "4" key rank ordered according to their frequency of use. Since "i" is the most commonly used of the three characters, it is presented at the top of the list. Further this character is indicated distinctly by highlighting, e.g. by a different colour, to indicate that this is the character suggested by the predictive editor. A cursor is also shown just after the highlighted character to further accentuate this character and indicate the insertion point of the next character.

It is noted that in figure 6 the suggestion for the newly entered character is not shown at the original insertion point in the entered text. Since the attention of the user is now focused on the object 11, this indication is no longer needed, and often this insertion point will be hidden behind the new object, so there is no need to update it before the word currently being entered is accepted. Therefore, processor resources may be saved by this indication not being updating. However, it is also possible just to update it at a lower rate, which will still save processor resources.

In the situation described here the user will continue by entering the next character of the word, and thus there is no need to make any decision about which of the three characters is actually the intended one.

In figure 7 the user has now also activated the key "6 mno" so that nine character sequences are possible, and those found in the vocabulary are selected for the list. The three most commonly used ones are now shown in the separate window 11. These are "in", "go" and "im" with "in" at the top of the list. An arrow at the bottom of the window indicates that the list actually contains more than the three shown candidates. Again the text at the original insertion point is here shown as not being updated. Since the list object is now the primary input object, it is possible to freeze the text editor and not update it as long as the list object is visible. This may be advantageous from an animation point of view as well as in relation to the computational resources.

In figure 8 the user has activated the key "6 mno" once more, and again the object shows the three candidates at the top of the list. It is noted that the width of the object 12 has now been enlarged to accommodate the long character sequences.

If the user stops entering characters in the middle of a word, e.g. because he is disturbed, it can be expedient to remove the graphical object after a certain amount of time, even if the word is kept open. When the user resumes the process of entering characters it will often be more useful to see the overview of the text that was entered before the disturbance. This is illustrated in figure 9. The graphical object is here removed, and the most commonly used character sequence, or the one that was highlighted in the list, is now shown at the original insertion point. The word stem "inn" is underlined to indicate that it is still open. In the upper right corner it is shown that "inn" is the first of 12 candidates, so this situation corresponds to figure 3, i.e. as it would have been without the graphical object described here. As soon as the user starts typing again the list reappears. It can be noted that there are also situations, e.g. when navigating backwards in text re-opening words automatically on every second navigation key press, where it could be advantageous to delay the opening of the graphical object. Thus the text is shown in the original way, the open word underlined, until the user decides to really go into "word edit mode", i.e. adding or deleting characters or scrolling candidates, where the graphical object is again made visible.

Figure 10 now shows that the user continues the entry process by activating the key "3 def". The object is now shown on the display again, and it is seen that "good" is now the most commonly used of the candidates suggested by the predictive editor, followed by "home" and "gone". The arrow indicates that also in this case there are further candidates. Here is shown a situation where the text at the original insertion point is also updated, just at a low rate. This is indicated by the "g" which is visible at the left edge of the graphical object. Since the text is updated at a low rate the character sequence indicated at the insertion point might still be "inn" for a certain time after the activation of the key. If "good" is the intended word, the user accepts it by e.g. entering a space character. The graphical object is then removed as shown in figure 11. The word "good" is now closed, so it is no longer underlined, and the system is ready for the next word.

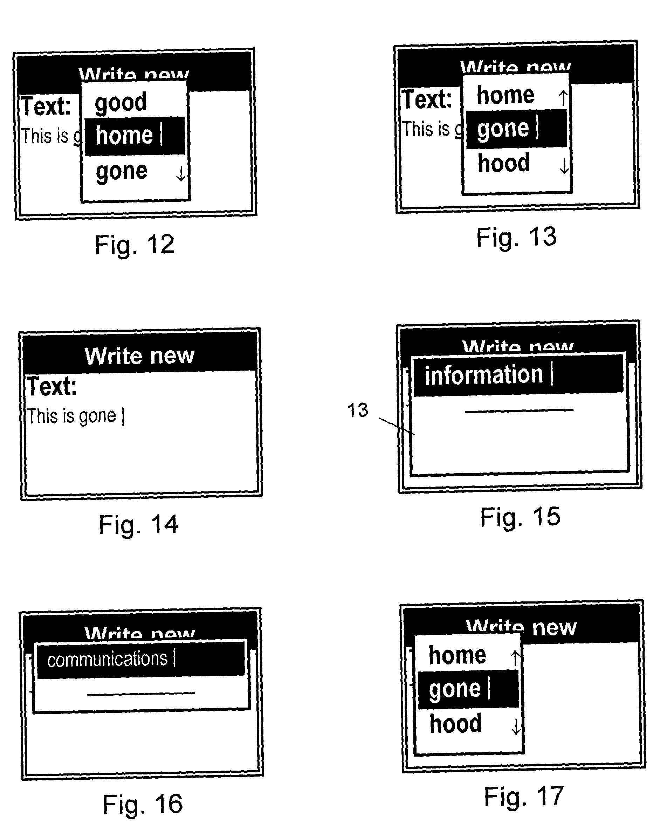

If, however, "good" was not the word the user intended to enter, the user can now scroll in the list by activating e.g. the "arrow down" key. In figure 12 the "arrow down" key has been activated once, and "home", which is the next word in the list, is now highlighted to indicate that this word can now be selected. In figure 12 the highlighting is moved to the middle of the list so that one word on either side of the highlighted one is visible, but of course the highlighting could also stay at the top of the list, while the words and word stems of the list are moved one step up. That the original text is only updated at a low rate is illustrated in that a "g" is still visible at the left edge of the graphical object instead of an "h" which would otherwise be expected. In figure 13 the "arrow down" key has been activated again, and "gone is now highlighted. The arrows now indicate that further candidates can be found in both directions. Supposing "gone" is the intended word it can now be accepted as mentioned before, and the result is shown in figure 14. The system is now ready for the next word to continue the message.

As mentioned above, the width of the graphical object 12 in figure 8 was enlarged compared to the object 11 in figure 7 to accommodate the longer character sequences. In case of even longer character sequences the width of the object can be further enlarged as illustrated with the object 13 in figure 15, where the word "information" has been entered. Figure 15 also illustrates a situation where there is only one candidate corresponding to the entered key sequence. Thus there is only one word to show in the list. As shown in figure 16 the font size of the characters shown in the object may also be changed according to the length of the shown character sequences. Typically the list object will start with the largest font and the smallest width, when the user starts entering characters for a new word. As characters are added, the width of the object is enlarged to accommodate the character sequence. To avoid too many layout changes the possible list widths can be chosen in steps like 25%, 50% and 100% of the full width. When 100 % is not enough to accommodate the word the font size can be reduced instead in one or more steps. If characters are deleted the object width can either be reduced, or the size can be kept unchanged. Keeping the size makes it look less "jumpy". If the word for some reason is so long that it cannot fit into the object even with the smallest font and the full width, the word may be divided to appear on two or more lines, or the object may disappear completely so that the system returns to the normal predictive editor format. However, this is a very uncommon situation.

As shown in figure 16, the height of the object may also be adjusted according to the number of words in the list. Further the examples mentioned above show the new graphical object located in the middle of the display. However, as shown in figure 17, which correspond to figure 13 just with the object shown to the left, the object may also be located at other positions on the display.

As described above, the predictive editor can provide words or word stems matching the entered key sequence, i.e. words or word stems having the same number of characters as the entered key sequence and each character being one of those associated with each keystroke. However, the predictor may also provide longer words beginning with word stems corresponding to the entered key sequence. In this way word completion can be provided, so that a suggestion of a full word may be presented after only a few keystrokes. Of course this will mean a larger number of candidates in the list, but in some cases it will be a more convenient solution. A combination having a further graphical object is also possible. The candidates consisting of the same number of letters as the number of entered keystrokes can be shown in the first list as described above, while a list of suggested longer words may be shown in the further graphical object. The user then has the possibility of selecting one of the longer words suggested or to continue entering characters.

As mentioned earlier, a cursor is in the examples above shown just after the highlighted character sequence to further accentuate this character and to indicate the insertion point of the next character. If the predictive editor also provides word completion, i.e. it suggests longer words based on the entered character sequence, the cursor may end up in the middle of the word. The tail after the cursor is the "completed" part of the word. Having the cursor in this graphical list object makes it the primary graphical object during typing. The original cursor present in the text entry object itself, i.e. the editor, might therefore be turned off, or it can be shown non-flashing or some other kind of hibernation mode to not confuse the user.

In the description above the list of candidates has always only contained whole candidates. In the case of languages which combine smaller words to longer ones (like Swedish) it might be an enhancement to include a larger part of the complete word rather than just the sub-part being entered. As an example, when entering the word "bildskärm" the whole word is not likely found in the vocabulary. More likely, it must be entered as two predictive words, i.e. "bild" + "skärm". In this case "bild" would be added as a head to all candidates when entering "skärm" using some graphics to indicate that it is a part of the current word, but not a part of the current candidate search. Also in this case a further object on the display could be useful, so that "bild" is shown in the first object after the corresponding four keystrokes while the other object suggests "bildskärm" and/or other words having "bild" as the first part.

In the examples mentioned above, the word "character" is used to describe a letter or numeric digit resulting from one keystroke on the keypad. However, "character" may also refer to a whole word or e.g. characters as used in some ideographic languages, which may be represented by a sequence of letters. An example is Chinese characters, which may be represented by pinyin syllables.

Even though the input system described above has many advantages, such as being faster and more accurate than the original predictive editor, it can of course be considered as a helping tool for the user, and therefore it may also be possible to turn the function off, if in some circumstances a user prefers the original version of the predictive editor.

Although a preferred embodiment of the present invention has been described and shown, the invention is not restricted to it, but may also be embodied in other ways within the scope of the subject-matter defined in the following claims.

## Claims

1. A method of entering text into an electronic communications device (1) by means of a keypad (3) having a number of keys, each key representing a plurality of characters, and wherein entered text is displayed on a display (2) arranged on the electronic communications device, the method comprising the steps of:
• activating a sequence of keys;
• generating possible character sequences corresponding to said activated key sequence;
• comparing said possible character sequences with a vocabulary (6) stored in a memory (5), said vocabulary comprising character sequences representing words occurring in a given language;
• pre-selecting those of said possible character sequences that match character sequences stored in said vocabulary (6); and
• presenting a number of the pre-selected character sequences on said display (2),
**characterized in that** the number of pre-selected character sequences are presented on the display (2) in a separate graphical object (11; 12; 13) arranged predominantly on the display.

2. A method according to claim 1, **characterized in that** the method further comprises the step of indicating distinctly one of the character sequences presented in said separate graphical object (11; 12; 13).

3. A method according to claim 2, **characterized in that** the method further comprises the steps of:
• rank ordering the pre-selected character sequences according to their frequency of use in said language, and
• indicating distinctly as default the most commonly used character sequence in said separate graphical object (11; 12; 13).

4. A method according to claim 2 or 3, **characterized in that** the method further comprises the step of allowing a user to indicate distinctly a different one of said pre-selected character sequences.

5. A method according to any one of claims 2 to 4, **characterized in that** the method further comprises the steps of:
• allowing a user to select the indicated character sequence, and
• adding the selected character sequence to the text displayed on the display (2).

6. A method according to claim 5, **characterized in that** the method further comprises the step of removing said separate graphical object (11; 12; 13) from the display (2) when a character sequence has been selected.

7. A method according to any one of claims 1 to 4, **characterized in that** the method further comprises the step of removing said separate graphical object (11; 12; 13) from the display (2) when a predefined period of time has elapsed since the last activation of a key.

8. A method according to claim 4, **characterized in that** the method further comprises the step of arranging said number of pre-selected character sequences vertically in said separate graphical object (11; 12; 13).

9. A method according to claim 8, **characterized in that** the step of allowing a user to indicate distinctly a different one of said pre-selected character sequences is performed by allowing the user to navigate between individual pre-selected character sequences by activating an upwards-key for indicating a character sequence presented just above the character sequence presently indicated, and by activating a downwards-key for indicating a character sequence presented just below the character sequence presently indicated.

10. A method according to claim 9, **characterized in that** the method further comprises the step of allowing the user, in the case where not all pre-selected character sequences are presented in said separate graphical object (11; 12; 13), to exclude one of the presently presented character sequences and instead present a character sequence not presently presented by activation of one of the upwards- and downwards-keys.

11. A method according to any one of claims 1 to 10, **characterized in that** the method further comprises the step of adjusting the width of said separate graphical object (11; 12; 13) according to the length of the character sequence being presented.

12. A method according to any one of claims 1 to 11, **characterized in that** the method further comprises the step of presenting the character sequences in said separate graphical object (11; 12; 13) with a font size which is adjusted according to the length of the character sequence being presented.

13. A method according to any one of claims 1 to 12, **characterized in that** the method further comprises the step of comparing said possible character sequences with a vocabulary (6) comprising character sequences representing words as well as word stems occurring in said given language.

14. A method according to claim 2, **characterized in that** the method further comprises the step of showing a cursor in combination with the distinctly indicated character sequence.

15. A method according to any one of claims 1 to 14, **characterized in that** the method further comprises the step of keeping text that is displayed outside said separate graphical object (11; 12; 13) unchanged as long as said separate graphical object is shown on the display (2).

16. A method according to any one of claims 1 to 14, **characterized in that** the method further comprises the step of updating text that is displayed outside said separate graphical object (11; 12; 13) at a low rate compared to the key activation rate as long as said separate graphical object is shown on the display (2).

17. An electronic communications device (1) having the possibility of entering text into the device, and comprising:
• a keypad (3) having a number of keys, each key representing a plurality of characters;
• a display (2) arranged on the electronic communications device, on which entered text may be displayed;
• a memory (5), wherein a vocabulary (6) comprising character sequences representing words occurring in a given language is stored;
• means (7) for generating possible character sequences corresponding to a sequence of activated keys;
• means (8) for comparing said possible character sequences with said stored vocabulary (6) and pre-selecting possible character sequences matching character sequences stored in the vocabulary; and
• means (9) for presenting a number of the pre-selected character sequences on said display,
**characterized in that** said presenting means (9) is arranged to present the number of pre-selected character sequences on the display (2) in a separate graphical object (11; 12; 13) arranged predominantly on the display (2).

18. An electronic communications device according to claim 17, **characterized in that** said presenting means (9) is further arranged to indicate distinctly one of the character sequences presented in said separate graphical object (11; 12; 13).

19. An electronic communications device according to claim 18, **characterized in that** the device is further arranged to:
• rank order the pre-selected character sequences according to their frequency of use in said language, and
• indicate distinctly as default the most commonly used character sequence in said separate graphical object (11; 12; 13).

20. An electronic communications device according to claim 18 or 19, **characterized in that** the device is further arranged to allow a user to indicate distinctly a different one of said pre-selected character sequences.

21. An electronic communications device according to any one of claims 18 to 20, **characterized in that** the device is further arranged to:
• allow a user to select the indicated character sequence, and
• add the selected character sequence to the text displayed on the display (2).

22. An electronic communications device according to claim 21, **characterized in that** the device is further arranged to remove said separate graphical object (11; 12; 13) from the display when a character sequence has been selected.

23. An electronic communications device according to any one of claims 17 to 20, **characterized in that** the device is further arranged to remove said separate graphical object (11; 12; 13) from the display when a predefined period of time has elapsed since the last activation of a key.

24. An electronic communications device according to claim 20, **characterized in that** the device is further arranged to present said number of pre-selected character sequences vertically in said separate graphical object (11; 12; 13).

25. An electronic communications device according to claim 24, **characterized in that** the device is further arranged to allow a user to indicate distinctly a different one of said pre-selected character sequences by allowing the user to navigate between individual pre-selected character sequences by activating an upwards-key for indicating a character sequence presented just above the character sequence presently indicated, and by activating a downwards-key for indicating a character sequence presented just below the character sequence presently indicated.

26. An electronic communications device according to claim 25, **characterized in that** the device is further arranged to allow the user, in the case where not all pre-selected character sequences are presented in said separate graphical object (11; 12; 13), to exclude one of the presently presented character sequences and instead present a character sequence not presently presented by activation of one of the upwards-and downwards-keys.

27. An electronic communications device according to any one of claims 17 to 26, **characterized in that** the device is further arranged to adjust the width of said separate graphical object (11; 12; 13) according to the length of the character sequence being presented.

28. An electronic communications device according to any one of claims 17 to 27, **characterized in that** the device is further arranged to present the character sequences in said separate graphical object (11; 12; 13) with a font size which is adjusted according to the length of the character sequence being presented.

29. An electronic communications device according to any one of claims 17 to 28, **characterized in that** the device is further arranged to compare said possible character sequences with a vocabulary (6) comprising character sequences representing words as well as word stems occurring in said given language.

30. An electronic communications device according to claim 18, **characterized in that** the device is further arranged to show a cursor in combination with the distinctly indicated character sequence.

31. An electronic communications device according to any one of claims 17 to 30, **characterized in that** the device is further arranged to keep text that is displayed outside said separate graphical object (11; 12; 13) unchanged as long as said separate graphical object is shown on the display (2).

32. An electronic communications device according to any one of claims 17 to 30, **characterized in that** the device is further arranged to update text that is displayed outside said separate graphical object (11; 12; 13) at a low rate compared to the key activation rate as long as said separate graphical object is shown on the display (2).

33. An electronic communications device according to any one of claims 17 to 30, **characterized in that** said generating means (7), comparing means (8) and presenting means (9) are implemented in a processor (4).
